Europäisches Patentamt

(19) European Patent Office

Office européen des brevets

(11) Veröffentlichungsnummer : **0 110 023**
**B1**

(12) **EUROPÄISCHE PATENTSCHRIFT**

(45) Veröffentlichungstag der Patentschrift :
04.03.87

(21) Anmeldenummer : 83108627.7

(22) Anmeldetag : 01.09.83

(51) Int. Cl.⁴ : **B 60 B   7/00**, B 60 B 21/10,
B 60 C  15/02

(54) Abdeckring für ein Fahrzeugrad.

(30) Priorität : 09.10.82 DE 3237544

(43) Veröffentlichungstag der Anmeldung :
13.06.84 Patentblatt 84/24

(45) Bekanntmachung des Hinweises auf die Patenterteilung : 04.03.87 Patentblatt 87/10

(84) Benannte Vertragsstaaten :
AT BE CH DE FR GB IT LI LU NL SE

(56) Entgegenhaltungen :
EP-A- 0 079 454
DE-A- 2 358 358
DE-C-  161 410
FR-A- 2 472 978
US-A- 1 919 910

(73) Patentinhaber : **Continental Gummi-Werke Aktiengesellschaft**
**Königsworther Platz 1**
**D-3000 Hannover 1 (DE)**

(72) Erfinder : **Seitz, Hans, Dr.Dipl.-Ing.**
**Grafenbergerstrasse 5 B**
**D-3012 Langenhagen 1 (DE)**
Erfinder : **Frerichs, Udo**
**Buchenweg 7**
**D-3012 Langenhagen 8 (DE)**
Erfinder : **Rach, Heinz-Dieter**
**Planetenring 32**
**D-3008 Garbsen 1 (DE)**
Erfinder : **Spendel, Siegmund**
**Dorfstrasse 25**
**D-3211 Bethein (DE)**

## Beschreibung

Die Erfindung betrifft einen Abdeckring für ein luftbereiftes Fahrzeugrad mit einem Gürtelreifen mit zug- und druckfesten Kernen in den Wülsten und mit einer starren Felge, die sich radial nach innen erstreckende Felgenhörner und neben diesen am inneren Umfang der Felge Sitzflächen zur Aufnahme des Gürtelreifens aufweist und bei der weiterhin am inneren Umfang zwischen den Sitzflächen und der Felgenschüssel Vertiefungen angeordnet sind, deren mittlerer Durchmesser größer ist als der mittlere Durchmesser der Sitzflächen, wobei der Abdeckring eine Breite aufweist, die den Raum zwischen Reifenwulst, Felgenkranz und Felgenschüssel abdeckt und wobei der radial innere Durchmesser des Abdeckringes an keiner Stelle des abzudeckenden Raumes größer ist als der radial innere Durchmesser des montierten Reifens im Wulstbereich.

Bei Fahrzeugrädern dieser Art besteht das Problem, daß sich in der vertikalen Stellung an einem Fahrzeug im Zwischenraum zwischen einem jeden Reifenwulst und der Felgenschüssel Schmutz fangen und Regenwasser ansammeln kann, das von dem höherstehenden Reifenwulst an einem Abfließen gehindert wird.

Bei einem Fahrzeugrad der eingangs genannten Gattung ist es bekannt (FR-A-2 472 978), einen Sicherheitsring vorzusehen, der ausschließlich die Aufgabe hat, den Reifenwulst auf seiner Sitzfläche am Felgenkranz zu sichern. Dies geschieht üblicherweise durch einen metallischen Klemmring. Beim vorbekannten Fahrzeugrad wird als Alternative zu dem Sicherheitsring ein Vorsprung am Felgenkranz genannt, der einer Wulstverschiebung nach axial innen entgegenwirkt.

Die obige Publikation über das vorbekannte Fahrzeugrad befaßt sich an keiner Stelle mit dem Problem, eine Schmutz- und Regenwasseransammlung in den Räumen neben den Reifenwülsten zu verhindern. Der vorbekannte Sicherheitsring ist zur Lösung dieses Problems für die Praxis nicht geeignet, weil er zum einen durch seinen metallischen Aufbau eine zu große Gewichtserhöhung für das Fahrzeugrad zur Folge hätte und weil er zum anderen durch seinen waagerechten Verlauf auf der radial inneren Seite noch eine erhebliche Schmutzansammlung im rechten Winkel zwischen ihm und der senkrechten Wand der Felge erlauben würde. Schließlich ist der starre Sicherheitsring äußerst schwierig zu montieren. Bei einem einteiligen Sicherheitsring ist eine Montage sogar völlig unmöglich.

Der Erfindung liegt deshalb die Aufgabe zugrunde, Schmutz- und Wasseransammlungen in dem gefährdeten Bereich des eingangs angegebenen Fahrzeugrades einfach und zuverlässig zu verhindern, wobei durch die vorgeschlagenen Maßnahmen unnötige Gewichtserhöhungen am Fahrzeugrad vermieden werden sollten.

Diese Aufgabe wird erfindungsgemäß durch einen Abdeckring gelöst, der dadurch gekennzeichnet ist, daß die radial innere Oberfläche des Abdeckrings in Querrichtung seitlich nach außen geneigt verläuft und daß der Abdeckring aus einem Kunststoff besteht.

Der erfindungsgemäße Abdeckring, der einen zuverlässigen Schutz des gefährdeten Bereichs gewährleistet, bietet den Vorteil einer einfachen Montier- und Demontierbarkeit.

Gemäß einer bevorzugten Ausführungsform ist der Abdeckring in seinen axialen Randbereichen elastisch verformbar, und er weist im nicht montierten Zustand in diesen Bereichen eine Form auf, die nach der Montage ein Andrücken an der Felgenschüssel und am Reifenwulst aufgrund von Eigenkräften zur Folge hat. Der Ring kann aus einem schwer entflammbaren Kunststoff bestehen.

Bei einer weiteren bevorzugten Ausführungsform trägt der Abdeckring an seinem äußeren Umfang in gleichmäßigen Abständen angebrachte Nocken, die in entsprechende Ausnehmungen des Reifenwulstes eingreifen. Weiterhin besitzt er entweder in Umfangsrichtung eine ungleichförmige Massenverteilung oder aber zusätzliche Klötze, die mittels Sollbruchebenen leicht entfernbar sind. Diese Zusatzklötze können auch in überbreiten Nocken verwirklicht sein. Durch die geschilderten Maßnahmen wird der Vorteil erzielt, daß der Abdeckring gleichzeitig als Auswuchtmittel verwendbar ist.

Nach einer weiteren bevorzugten Ausführungsform besteht der Abdeckring aus Hartschaum, der den Raum zwischen Reifenwulst, Felgenkranz und Felgenschüssel ausfüllt. Der Hartschaumring kann zur einfacheren Montage und Demontage aus Segmenten aufgebaut sein. Ein solcher Hartschaumring bietet den zusätzlichen Vorteil, den Reifenwulst gegen ein Abheben von der Felgensitzfläche zu sichern.

Eine weitere bevorzugte Ausführungsform sieht einen Hartschaumring mit einem Zierring auf der radial inneren Seite vor. Dieser Zierring kann gleichzeitig als Schablone bei der Herstellung des Hartschaumrings dienen. Weiterhin kann er Befestigungsmittel zur Aufnahme von Auswuchtgewichten aufweisen.

Nachfolgend werden mehrere Ausführungsbeispiele der Erfindung anhand einer Zeichnung beschrieben.

Es zeigt

Figur 1 ein Fahrzeugrad mit zwei montierten Abdeckringen mit je einem umlaufenden Vorsprung in einem radialen Teilschnitt,

Figur 2 einen vergrößerten Ausschnitt der Fig. 1 im Bereich des einen Abdeckrings,

Figur 3 einen Ausschnitt bis zur Felgenmitte mit einem montierten Abdeckring mit überbreiten Nocken in einem radialen Teilschnitt,

Figur 4 den Abdeckring gemäß Fig. 3 im nicht montierten Zustand und mit zusätzlichen Klötzen,

Figur 5 den Ausschnitt mit dem montierten Abdeckring gemäß Fig. 3 in einem Schnitt auf der Linie V-V,

Figur 6 ein Fahrzeugrad mit zwei montierten Abdeckringen aus Hartschaum und mit je einem Zierring in einem radialen Teilschnitt,

Figur 7 einen vergrößerten Ausschnitt der Fig. 6 im Bereich des einen Abdeckrings.

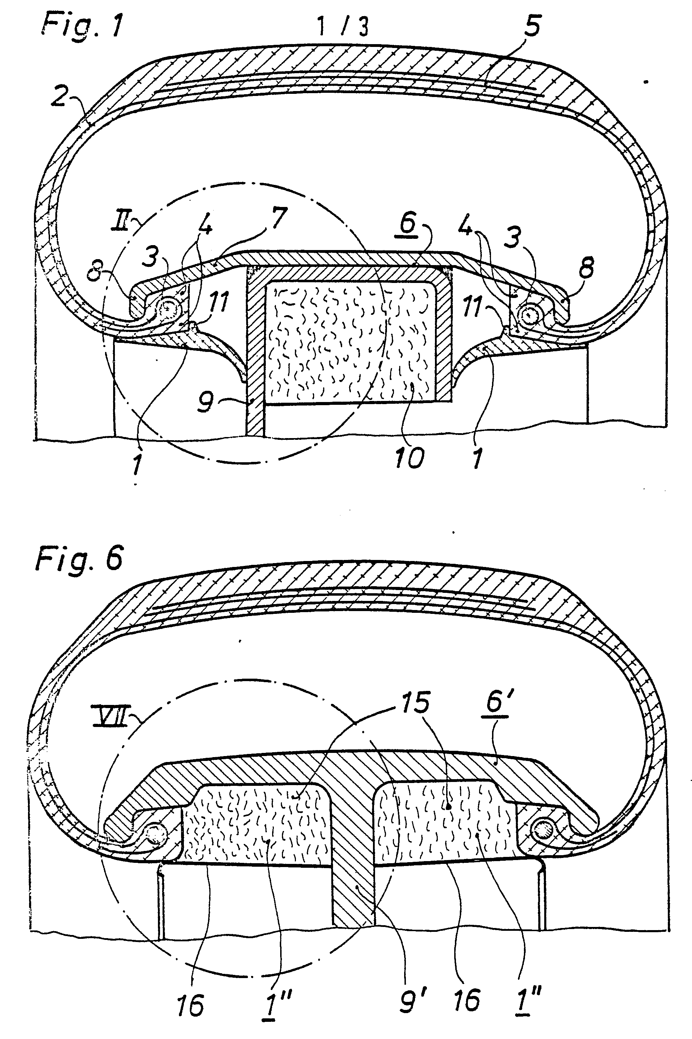

In Fig. 1 ist ein Fahrzeugrad mit einem Abdeckring 1 im montierten Zustand dargestellt. Ein Gürtelreifen mit einer Radialkarkasse 2, die mit ihren Enden durch Umschlingen der Wulstkerne 3 in den Wülsten 4 verankert ist, und mit einem üblichen Gürtel 5 ist derart auf einer Felge 6 montiert, daß die Wulstsitzflächen sich auf radial innen vom Felgenkranz 7 gelegenen Sitzflächen neben den nach radial innen sich erstreckenden Felgenhörnern 8 auf der Felge 6 befinden. Der Felgenkranz 7 ist an einer Felgenschüssel 9 befestigt, die in ihrem radial äußeren Bereich im Schnitt U-förmig verläuft. Zur Verhinderung des Eindringens von Schmutz und Regenwasser ist der U-förmige Bereich von einem Schaumring 10 ausgefüllt.

Zur Abdeckung der seitlich außen neben den U-Schenkeln der Felgenschüssel 9 befindlichen Räume, die weiterhin vom Felgenkranz 7 und von den Reifenwülsten 4 begrenzt werden, dienen die beiden gleichgroßen Abdeckringe 1. Bei Felgen, deren Schüssel nicht U-förmig abgebogen und nicht mittig am Felgenkranz befestigt ist, sind Abdeckringe unterschiedlicher Größe zu montieren. Ist dagegen eine nicht U-förmig abgebogene Schüssel mittig am Felgenkranz montiert, sind Abdeckringe gleicher Größe zu verwenden, für die jedoch gegenüber den in Fig. 1 dargestellten eine größere Breite vorzusehen ist.

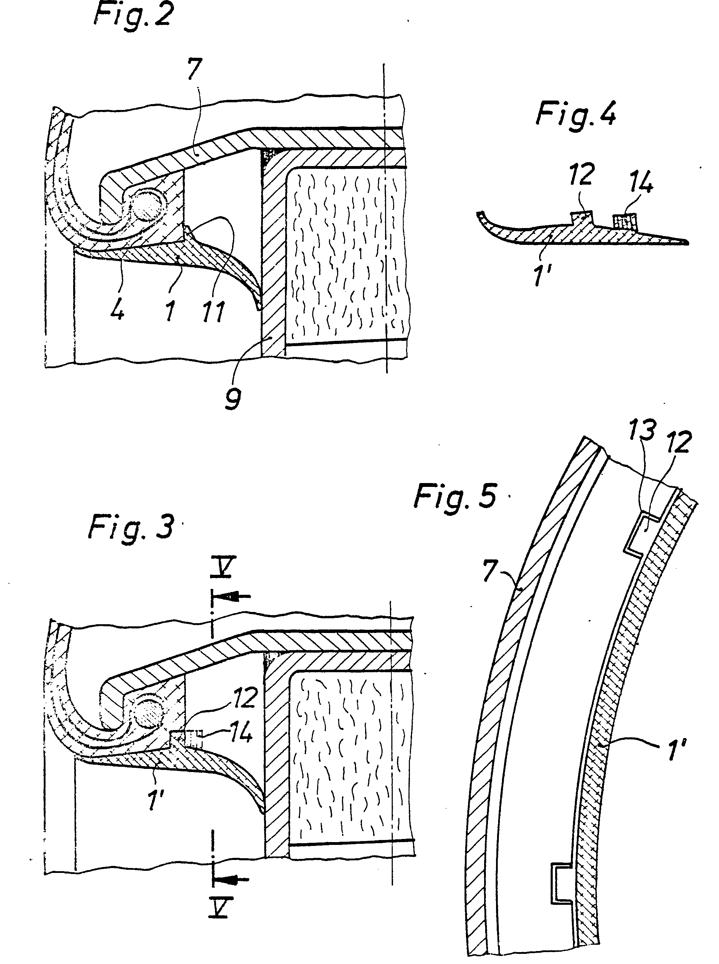

In Fig. 2 ist ein vergrößerter Ausschnitt des Rades gemäß Fig. 1 im Bereich des einen Abdeckrings 1 dargestellt. In seinen axialen Randbereichen ist der Ring 1 verjüngt ausgebildet und er liegt dort mit Eigendruck an der Felgenschüssel 9 bzw. an einem Reifenwulst 4 an, so daß diese Bereiche die Funktion von Dichtlippen übernehmen. Auf der dem Felgenkranz 7 zugewandten Seite befindet sich ein umlaufender Vorsprung 11, mit dem sich der Abdeckring 1 hinter dem Reifenwulst 4 verhakt. Auf der radial inneren Oberfläche verläuft der Abdeckring 1 in Querrichtung, die im Rahmen dieser Anmeldung auch als Axialrichtung bezeichnet werden soll, seitlich nach außen geneigt, so daß Regen- und Spritzwasser nach außen hin ablaufen kann. Auch wird eine Ansammlung von Schmutz zuverlässig verhindert.

Der elastisch verformbare Abdeckring 1 kann aus einem schwer entflammbaren Kunststoff bestehen. Auf jeden Fall muß gewährleistet sein, daß die an der Felgenschüssel 9 durch häufiges Bremsen auftretenden Temperaturen vertragen werden.

Der Abdeckring 1' gemäß Fig. 3, 4 und 5 weist statt eines umlaufenden Vorsprungs einzelne über den äußeren Umfang gleichmäßig verteilte Nocken 12 auf, mit einem gegenseitigen Abstand von $1/12 \, r\pi$ bis $1/6 \, r\pi$ ($r$ = äußerer Radius des Abdeckrings). Die Nocken 12 greifen in zugehörige Ausnehmungen 13 des Reifenwulstes 4 ein, so daß der Ring 1' gegen Verdrehungen in Umfangsrichtung gesichert ist. Diese Fixierung in Verbindung mit einer ungleichmäßigen Massenverteilung in Umfangsrichtung oder mit zusätzlichen Klötzen 14 (Fig. 4) am radial äußeren Umfang des Abdeckrings 1' gibt dem Abdeckring 1' gleichzeitig die Funktion eines Auswuchtrings. Dabei ist es günstig, im Falle zusätzlicher Klötze 14 diese mit Sollbruchebenen zu versehen und in mehrere Einzelteile zu unterteilen, so daß für ein Auswuchten « Gewichte » in kleinen Einheiten entfernt werden können. Die zusätzlichen Klötze 14 können auch in der Weise angebracht sein, daß die zur Fixierung dienenden Nocken 12 eine Überbreite aufweisen (Fig. 3), die durch Entfernung einzelner « Gewichte » reduziert wird.

In Fig. 4 ist ein Abdeckring 1' im unmontierten Zustand zu erkennen. Es kommt vor allem auf die Ausbildung der Randbereiche an, die beim Übergang in den montierten Zustand elastisch verformt werden, so daß sich Rückstellkräfte bilden, die ein zuverlässiges Andrücken an der Felgenschüssel 9 bzw. am Reifenwulst 4 bewirken.

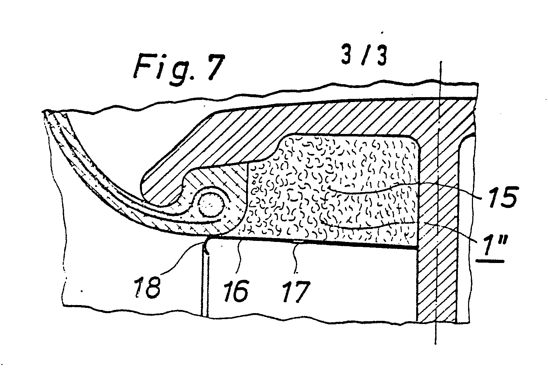

Die Fig. 6 zeigt ein weiteres Fahrzeugrad mit einem Gürtelreifen und einer Felge 6' mit mittig angebrachter Felgenschüssel 9' sowie mit zwei Abdeckringen 1", die aus Hartschaum 15 bestehen und radial innen mit einem Zierring 16 versehen sind. In Fig. 7 ist ein vergrößerter Ausschnitt des Rades nach Fig. 6 im Bereich des einen Abdeckrings 1" dargestellt. Der Zierring 16 kann als Schablone zum Verschäumen des Hartschaums 15 dienen. Dazu sollte er mehrere über den Umfang verteilte Öffnungen 17 aufweisen, die zum Zuführen des Schaums 15 und zur Entlüftung dienen. Der Zierring 16 kann mit Hilfe von Kunststoffdübeln oder auf andere Weise am Schaumring 15 befestigt sein, und er kann Befestigungsmittel 18 zum Anbringen von Auswuchtgewichten aufweisen.

Der Hartschaumring 15 kann auch als vorgefertigtes Bauteil, z. B. in Form von Einzelsegmenten ausgeführt sein, und er kann radial innen eine dekorative Oberfläche aufweisen, so daß sich ein zusätzlicher Zierring erübrigt.

Die vorstehend beschriebenen Abdeckringe mit einem Hartschaumring 15 erfüllen zusätzlich eine Sicherungsfunktion für die Reifenwülste 4, indem sie ein Abheben der Reifenwülste 4 von den Felgensitzflächen verhindern.

**Patentansprüche**

1. Abdeckring (1, 1', 1") für ein luftbereiftes Fahrzeugrad mit einem Gürtelreifen mit zug- und druckfesten Kernen (3) in den Wülsten (4) und mit einer starren Felge (6, 6'), die sich radial nach innen erstreckende Felgenhörner (8) und neben diesen am inneren Umfang der Felge (6, 6') Sitzflächen zur Aufnahme des Gürtelreifens aufweist und bei der weiterhin am inneren Umfang zwischen den Sitzflächen und der Felgenschüssel Vertiefungen angeordnet sind, deren mittlerer Durchmesser größer ist als der mittlere Durchmesser der Sitzflächen, wobei der Abdeckring (1, 1', 1") eine Breite aufweist, die den Raum zwischen Reifenwulst (4), Felgenkranz und Felgenschüssel abdeckt und wobei der radial innere Durchmesser des Abdeckringes (1, 1', 1") an keiner Stelle des abzudeckenden Raumes größer ist als der radial innere Durchmesser des montierten Reifens im Wulstbereich, dadurch gekennzeichnet, daß die radial innere Oberfläche des Abdeckrings (1, 1', 1") in Querrichtung seitlich nach außen geneigt verläuft und daß der Abdeckring aus einem Kunststoff besteht.

2. Abdeckring nach Anspruch 1, dadurch gekennzeichnet, daß er zumindest im der Felgenschüssel (9) angrenzenden Bereich aus einem schwer entflammbaren Material besteht und daß er in den axialen Randbereichen elastisch verformbar ist.

3. Abdeckring nach Anspruch 1, dadurch gekennzeichnet, daß er auf der radial äußeren Seite einen umlaufenden Vorsprung (11) zur Abstützung am Reifenwulst (4) aufweist.

4. Abdeckring nach Anspruch 1, dadurch gekennzeichnet, daß er auf der radial äußeren Seite gleichmäßig über den Umfang verteilte Nocken (12) aufweist, die in angepaßte Ausnehmungen (13) des Reifenwulstes (4) eingreifen.

5. Abdeckring nach Anspruch 4, gekennzeichnet durch eine in Umfangsrichtung ungleichförmige Massenverteilung.

6. Abdeckring nach Anspruch 4, gekennzeichnet durch über den radial äußeren Umfang verteilte Klötze (14), die mittels Sollbruchebenen einfach entfernbar sind.

7. Abdeckring nach Anspruch 1, dadurch gekennzeichnet, daß er aus Hartschaum (15) besteht und den Raum zwischen Reifenwulst (4), Felgenkranz (7) und Felgenschüssel (9') ausfüllt.

8. Abdeckring nach Anspruch 7, dadurch gekennzeichnet, daß der Hartschaumring (15) aus Segmenten zusammengesetzt ist.

9. Abdeckring nach Anspruch 7, dadurch gekennzeichnet, daß er auf der radial inneren Seite einen Zierring (16) aufweist.

## Claims

1. Cover ring (1, 1', 1") for a vehicle wheel provided with a belted pneumatic tyre having substantially inextensible and pressure-resistant cores (3) in the beads (4) and having a rigid rim (6, 6') which has radially inwardly extending rim flanges (8) and, in addition thereto on the inner circumference of the rim (6, 6'), has seating surfaces for receiving the belted tyre and wherein also, on the inner circumference between the seating surfaces and the rim dish, recesses are provided with a mean diameter which is greater than the mean diameter of the seating surfaces, the cover ring (1, 1', 1") having a width which covers the space between tyre bead (4), rim ring and rim dish, and the radially inner diameter of the cover ring (1, 1', 1") is at no place in the space to be covered greater than the radially internal diameter of the assembled tyre in the bead region, characterised in that the radially internal surface of the cover ring (1, 1', 1") extends in the transverse direction in a laterally and outwardly inclined manner, and in that the cover ring is formed from a plastics material.

2. Cover ring according to claim 1, characterised in that, at least in the region bordering on the rim dish (9), it is formed from a material which is difficult to inflame, and in that it is resiliently deformable in the axial edge regions.

3. Cover ring according to claim 1, characterised in that, on the radially outer side, it has a circumferential projection member (11) for support on the tyre bead (4).

4. Cover ring according to claim 1, characterised in that, on the radially outer side, it has cams (12) which are evenly distributed over the circumference and engage in suitable recesses (13) in the tyre bead (4).

5. Cover ring according to claim 4, characterised by a mass distribution which is irregular in the circumferential direction.

6. Cover ring according to claim 4, characterised by blocks (14) which are distributed over the radially outer circumference and can be easily removed by means of intended breaking planes.

7. Cover ring according to claim 1, characterised in that it is formed from hard foam (15) and fills the space between tyre bead (4), rim ring (7) and rim dish (9').

8. Cover ring according to claim 7, characterised in that the hard foam ring (15) is composed of segments.

9. Cover ring according to claim 7, characterised in that it has a decorative ring (16) on the radially inner side.

## Revendications

1. Anneau d'obturation (1, 1', 1") pour une roue de véhicule équipée d'un pneumatique radial avec, dans les talons (4), des tringles (3) résistant à la traction et à la compression, et une jante (6, 6') rigide avec des rebords (8) s'étendant radialement vers l'intérieur et, proches de ces derniers sur la circonférence intérieure de la jante (6, 6') des repos recevant le pneumatique radial et, entre ces derniers et le voile, des cavités de diamètre moyen supérieur au diamètre moyen des repos, ledit anneau d'obturation (1, 1', 1") ayant une largeur, qui recouvre l'espace compris entre le talon (4) du pneumatique, la base de la jante et le voile, et un diamètre radial intérieur qui en aucun point de l'espace à recouvrir n'est supérieur au diamètre radial intérieur de la zone des talons du pneumatique monté, et étant caractérisé en ce que la surface radiale intérieure de l'anneau d'obturation (1, 1', 1") est, dans le sens transversal, inclinée latéralement vers l'extérieur ; et l'anneau d'obturation (1, 1', 1") est réalisé dans une matière plastique.

2. Anneau d'obturation selon revendication 1, caractérisé en ce que la zone voisine du voile (9) de la jante au moins est réalisée dans un matériau difficilement inflammable ; et les zones marginales axiales sont déformables élastiquement.

3. Anneau d'obturation selon revendication 1, caractérisé par une saillie circulaire (11) du côté radial extérieur pour l'appui sur le talon (4) du pneumatique.

4. Anneau d'obturation selon revendication 1, caractérisé par des ergots (12) équidistants sur la circonférence du côté radial extérieur et s'engageant dans des encoches adaptées (13) du talon (4) du pneumatique.

5. Anneau d'obturation selon revendication 4, caractérisé par une distribution irrégulière des masses suivant le sens circonférentiel.

6. Anneau d'obturation selon revendication 4, caractérisé par des masselottes (14) réparties sur la circonférence radiale extérieure et s'éliminant simplement par des plans de rupture.

7. Anneau d'obturation selon revendication 1, caractérisé en ce qu'il est réalisé en mousse rigide (15) et remplit l'espace compris entre le talon (4) du pneumatique, la base (7) et le voile (9') de la jante.

8. Anneau d'obturation selon revendication 7, caractérisé en ce que l'anneau en mousse rigide (15) est constitué par des secteurs.

9. Anneau d'obturation selon revendication 7, caractérisé par un anneau enjoliveur (7) sur le côté radial intérieur.

**Fig. 1**

1 / 3

**Fig. 6**

*Fig.2*

*Fig.4*

*Fig.3*

*Fig.5*

Fig. 7

15

1"

18      16      17